# EUROPÄISCHE PATENTSCHRIFT

(11) **EP 0 585 701 B1**
(45) Veröffentlichungstag und Bekanntmachung des Hinweises auf die Patenterteilung: **16.10.1996**
(21) Anmeldenummer: 93113054.6
(22) Anmeldetag: 14.08.1993
(51) Int. Cl.: B03B 9/06, H01M 10/54

(54) **Verfahren zum Entsorgen von Nickel-Cadmium- oder Nickel-Hydrid-Zellen**
Method of treating nickel-cadmium of nickel-hydride cells
Procédé pour le traitement des cellules nickel-cadmium ou nickel-hydride

(30) Priorität: 02.09.1992 CH 2750/92
(43) Veröffentlichungstag der Anmeldung: 09.03.1994
(73) Patentinhaber: ENVIRO EC AG, CH-6300 Zug (CH)
(72) Erfinder: Alavi, Kamal, CH-6318 Walchwil (CH); Salami, Bahman, Dr., CH-6343 Rotkreuz (CH)
(74) Vertreter: Kägi, Otto Patentanwalt

(56) Entgegenhaltungen:
- EP-A- 0 244 901
- EP-A- 0 425 045
- EP-A- 0 443 929
- DD-A- 282 925
- DE-A- 4 020 227
- GB-A- 1 105 676
- CONFERENCE PROCEEDINGS OF THE ELEVENTH INTERNATIONAL TELECOMMUNICATIONS ENERGY CONFERENCE (INTELEC 89), Oktober 1989 , FIRENZE IT Seiten 17.3-1 - 17.3-6 KIEHNE: 'What is to do with used batteries within telecommunications services?'

## Beschreibung

Die Erfindung bezieht sich auf ein Verfahren zum Entsorgen von Nickel-Cadmium- oder Nickel-Hydrid-Zellen.

Nickel-Cadmium-Zellen sind als Sekundärelemente (wiederaufladbare Batterien, Akkumulatoren) für die Stromversorgung insbesondere tragbarer elektrischer und elektronischer Geräte weit verbreitet. In entsprechend grossen Mengen fallen solche Zellen für die Entsorgung an, nachdem sie unbrauchbar geworden bzw. aus dem Gebrauch genommen worden sind. Hauptbestandteile dieser Zellen sind normalerweise:
- Gehäuse (Mantel) aus vernickeltem Stahlblech,
- Gitterelektroden aus vernickeltem, gelochtem Stahlblech oder -Drahtgeflecht,
- mit den Gitterelektroden versintertes Nickelpulver sowie Nickel-Hydroxid,
- Cadmium als metallisches Pulver und Cadmium-Hydroxid,
- isolierende Zwischenlagen (Scheider) aus gepresster, synthetischer Watte und Papier,
- Plastik-Scheiben, event. Holz,
- Kalium-Hydroxid KOH als Elektrolyt (die Anteile zwischen metallischem Ni und Cd einerseits und deren Hydroxiden variieren je nach Ladezustand).

Das geordnete Sammeln und Entsorgen solcher Zellen ist vor allem wegen dem hohen Gehalt an hochtoxischem Cadmium (rund 20 %), aber auch wegen dem Nickel sowie dem Elektrolyten geboten; anderseits sind aber Ni und Cd auch relativ wertvolle Metalle, für die eine rege Nachfrage besteht. - Seit einiger Zeit sind auch sogenannte Nickel-Hydrid-Zellen bekannt und werden vermehrt zur Anwendung gelangen. Bei dieser Art von wiederaufladbaren Batterien sind Cadmium und Cadmium-Hydroxid ersetzt durch spezielle Metall-Hydride, z.B. Titan-Nickel-Hydrid, Eisen-Titan-Hydrid, Lanthan-Nickel-Hydrid etc., die eine hohe Speicherfähigkeit für Wasserstoff aufweisen. Zwar entfällt bei diesen Zellen das giftige Cadmium, jedoch stellt sich die Aufgabe der Entsorgung und der Wiedergewinnung seltener Wertstoffe in gleicher Weise.

Eine fachgerechte Entsorgung bzw. die sortenreine Wiedergewinnung der verwertbaren Bestandteile bereitet jedoch bei dieser Art "Schrott" erhebliche Schwierigkeiten, hauptsächlich wegen dem sehr kompakten, geschichteten und teilweise gesinterten Aufbau der Zellen. Bisher sind vor allem zwei Verfahren bekannt und auch technisch angewendet worden:

Gemäss einem pyrolytischen Verfahren wird das vorzerkleinerte Schrottmaterial bei Anwesenheit von Sauerstoff auf über 400°C erhitzt, wobei sich das Ni- und Cd-Hydroxid zersetzt und die organischen Bestandteile verbrennen. Der Rückstand wird sodann zusammen mit Kohlenstoff auf über 900°C erhitzt, wobei das Cadmium verdampft und mittels Destillation zurückgewonnen wird. Das verbleibende Ni und Fe können der Ferro-Nickel-Produktion zugeführt werden. Dieses Verfahren ist unwirtschaftlich, indem es einen sehr hohen Energiebedarf hat und mehr als 30% Schlacke anfällt, die ihrerseits entsorgt werden muss. Insbesondere sind auch die Kontrolle des Cd-Dampfes und die Abgasreinigung sehr aufwendig.

Beim zweiten Verfahren wird die gesamte Schrottmenge in Mineralsäure aufgelöst. Das Säurebad wird sodann filtriert, und die gelösten Metalle werden einzeln ausgefällt. Das bei diesem Verfahren unvermeidliche Auflösen des gesamten Metallgehalts einschliesslich des Eisens bedingt eine grosse Säuremenge und entsprechend umfangreiche Installationen für die Reinigung und Wiederaufbereitung des Säurebades.

Gemäss einem früheren, nicht vorveröffentlichten Vorschlag zur Aufbereitung von Ni-Cd-Batterien (CH-Patentgesuch Nr. 3466/91-9 vom 27.11.1991) wird die Schrottmenge mit flüssigem Stickstoff gekühlt bzw. versprödet und dann auf 5-8 mm zerkleinert. Das Granulat wird anschliessend gewaschen und dabei vom löslichen Elektrolyt befreit, hierauf bei 80-90°C getrocknet und dann in einer Kugelmühle gemahlen; anschliessend soll das Mahlgut weitgehend mit mechanischen Mitteln und teilweise nach erneutem Mahlen in Fraktionen getrennt werden. Nach diesem Vorschlag könnten zwar die meisten der vorgenannten, schwerwiegenden Nachteile vermieden werden, jedoch ist eine zufriedenstellende Materialtrennung - insbesondere die wirksame Separierung des Cadmiums - nicht erreichbar. Es ist zu vermuten, dass solche Schwierigkeiten zum Teil auf die Materialbehandlung mittels Kugelmühlen zurückzuführen sind, was eine teilweise Kompaktierung der Schrottpartikel bewirkt und die nachfolgende mechanische Materialtrennung, insbesondere ein Sieben, erheblich erschwert. Ungünstig ist weiterhin der grosse Bedarf an Waschwasser bzw. der Aufwand für dessen Reinigung, sowie der Energie- und Zeitaufwand für das Trocknen des gesamten Materials.

Mit der vorliegenden Erfindung sollen auf wirtschaftliche und umweltschonende Weise die metallischen Schrottbestandteile - insbesondere Nickel, Cadmium und ggf. Metallhydride - möglichst vollständig und in hinreichender Reinheit als wiederverwertbare Rohstoffe zurückgewonnen werden, während unvermeidliche Rückstände weitgehend frei von Schwermetallen, d.h. in deponiefähiger Beschaffenheit erhalten werden sollen.

Diese Aufgabe wird gemäss der Erfindung mit den im Anspruch 1 angegebenen Verfahrensschritten gelöst. Weitere, vorteilhafte Ausgestaltungen des erfindungsgemässen Verfahrens sind in den abhängigen Ansprüchen angegeben.

Die Vorteile des Verfahrens nach der Erfindung werden vor allem darin gesehen, dass das Schrottmaterial durch ausschliesslich mechanische und "trockene" Verfahrensschritte bereits eine weitgehende Auftrennung in die gewünschten Fraktionen erfährt; nasschemische Prozesse und ggf. eine Waschbehandlung werden erst anschliessend nur noch auf Teilmengen angewendet und sind spezifisch auf diese ausgerichtet; solche "nassen" Verfahrensschritte gestalten sich dadurch wesentlich rationeller und auch wirksamer. Insgesamt wird bei tragbarem Energieaufwand und günstigem Materialfluss eine sehr gute Stofftrennung erreicht.

Ein Ausführungsbeispiel der Erfindung mit Varianten wird nachstehend in Verbindung mit der Zeichnung näher beschrieben.
- Fig. 1: veranschaulicht schematisch als Flussdiagramm einen ersten Teil des Verfahrens, welcher hauptsächlich die Verarbeitung der Sieb-Grobfraktion betrifft, und
- Fig. 2: zeigt in analoger Darstellung die Verarbeitung der Sieb-Feinfraktion und an anderen Stellen gesammelter Feinanteile.

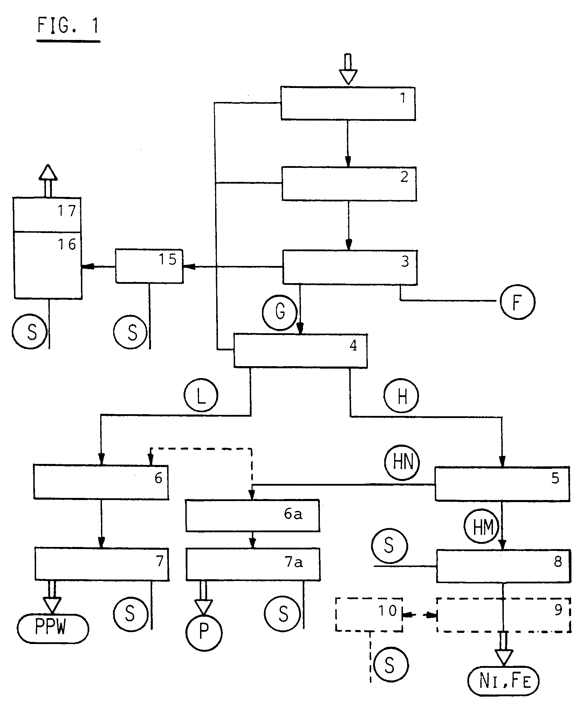

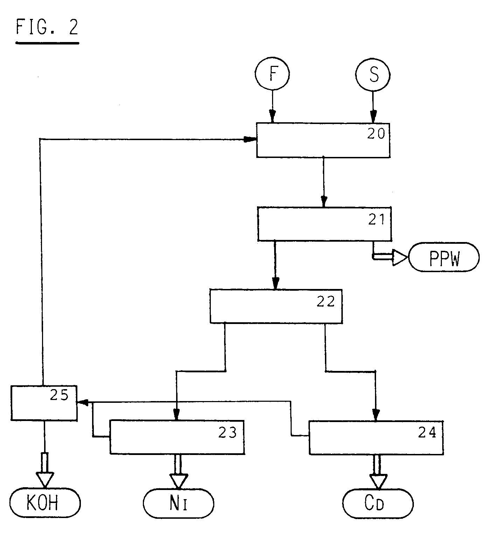

Die Figuren 1 und 2 veranschaulichen einerseits die wesentlichen Verfahrensschritte zum Entsorgen von Nickel-Cadmium-Zellen (Batterien), lassen aber auch den allgemeinen Aufbau einer entsprechenden Anlage erkennen.

Das Schrottmaterial - gesammelte Ni-Cd-Batterien - wird gemäss Fig. 1 zuerst zur Vorzerkleinerung in einen Shredder 1 gegeben, eine gewöhnliche, relativ langsam laufende Schneidmühle mit Parallelschnitt-Messern. Anschliessend erfolgt eine schleifende Nachzerkleinerung des Schrottmaterials, wobei einerseits die Blechteile in kleine Stücke zerschnitten, aber gleichzeitig von angesintertem und festgepresstem Pulvermaterial durch Schleifen oder "Schaben" weitgehend befreit werden. Für diese Nachzerkleinerung eignet sich insbesondere ein Kreuzscherenschnitt-Shredder "Rotoplex" der Alpine Aktiengesellschaft Augsburg, Typ 28/40 bis 63/100 gemäss Prospekt 164-166/ 1d, mit offenem Kreuzscherenschnitt-Rotor, welcher mit relativ hoher Drehzahl (bis 1500 je Minute) umläuft. Es hat sich erwiesen, dass die Nachzerkleinerung des Materials in einer derartigen Schneidmühle (auch als "Schleifshredder" bezeichnet) - im Gegensatz zur Materialzertrümmerung in einer Kugel- oder Hammermühle - das Schrottmaterial gründlich mechanisch aufschliesst und dadurch die nachfolgende Materialtrennung wesentlich erleichtert oder überhaupt erst ermöglicht.

Anschliessend wird das nachzerkleinerte Schrottmaterial auf einem Rüttelsieb 3 in eine Sieb-Feinfraktion F (Teilchengrösse kleiner als etwa 1 mm) und in die Sieb-Grobfrakion G getrennt. Die Verarbeitung der Sieb-Feinfraktion F wird weiter unten anhand der Fig. 2 beschrieben.

Die beim Sieben anfallende Grobfraktion G mit einem Gewichtsanteil von typischerweise etwa 45 % besteht hautpsächlich aus Spänen von vernickeltem Eisenblech, vermischt mit nichtmetallischen Bestandteilen (Papier, Plastik, Watte, PPW), Nickel- und Cadmium-Pulver sowie feuchtem Elektrolyt. Diese Grobfraktion G wird in einem Windsichter 4 in eine Schwerfraktion H und eine Leichtfraktion L getrennt. Die Luftströmung des Windsichters 4 wird über einen Zyklon 15 und anschliessend einen Staubfilter 16 geleitet. Vorzugsweise sind auch der Shredder 1, der Schleifshredder 2 und das Sieb 3 gekapselt und werden pneumatisch entstaubt, wobei die staubbeladene Abluft ebenfalls durch den Zyklon 15 und den Staubfilter 16 geleitet wird. Dem Staubfilter 16 kann ein Adsorptionsfilter 17 (Aktivkohle) nachgeschaltet sein, so dass beim Luftaustritt ins Freie keine Geruchsbelästigung besteht. Die im Zyklon 15 und dem Staubfilter 16 anfallenden, überwiegend metallischen Feinanteile S werden gesammelt; die Verarbeitung dieser Feinanteile ist weiter unten beschrieben.

Die aus dem Windsichter 4 austretende Schwerfraktion H wird mittels Magnetscheidung 5 in einen magnetischen Anteil HM und einen nichtmagnetischen Anteil HN getrennt. Die oben genannte Leichtfraktion L vom Windsichter wie auch der nichtmagnetische Anteil HN vom Magnetscheider werden sodann getrocknet, z.B. je in einer beheizten Trommel 6 bzw. 6a bei 70°-80°C, und gelangen dann auf ein Rüttelsieb 7 bzw. 7a. Hier werden noch vorhandene Feinanteile S, insbesondere Cadmium- und Nickel-Pulver sowie kristallisierter Elektrolyt KOH, abgetrennt. Der Siebrückstand - der Hauptanteil der im Schrottmaterial enthaltenen nichtmetallischen Bestandteile Papier, Plastik und Watte und ein Teil des Elektrolyten - ist von Schwermetallen praktisch freier, ungiftiger Abfall, welcher problemlos entsorgt, z.B. verbrannt werden kann (Gewichtsanteil rund 5 %). - Infolge der Gewichtstrennung im Windsichter 4 wird die Leichtfraktion L vorwiegend Papier und Watte (und nur geringere Plastik-Anteile) enthalten, der Schweranteil H dagegen überwiegend Plastik, welcher im Rüttelsieb 7a als Siebrückbehalt P aus dem nichtmagnetischen Anteil HN anfällt. Sofern es sich um hochwertige Kunststoffe handelt (in den betreffenden Zellen werden häufig Polyolefine als isolierende Distanzhalter verwendet), kann die gewonnene Plastik-Menge P rezykliert, insbesondere bei der Zellen-Herstellung wiederverwendet werden. Andernfalls, wenn sich die Wiederverwendung nicht lohnt, kann der nichtmagnetische Anteil HN zusammen mit der Leichtfraktion L in den Aggregaten 6 und 7 gereinigt werden, wie mit unterbrochenen Linien angedeutet.

Der bei der Magnetscheidung 5 anfallende magnetische Anteil HM wird seinerseits durch eine mechanische Scheuerbehandlung 8 von anhaftendem Elektrolyt und überwiegend metallischen Feinanteilen S befreit. Diese Behandlung kann beispielsweise wiederum mittels Rüttelsieb durchgeführt werden; besonders wirksam ist indessen eine (an sich bekannte) relativ langsam umlaufende Siebtrommel mit einer Füllung von abrasiv wirkendem, grobkörnigem Granulat.

Eine solche Trommel kann vom magnetischen Anteil HM chargenweise oder kontinuierlich durchlaufen werden. Dabei fällt wiederum Feinanteil S an, und es wird ein ausreichend gereinigtes Eisen-Nickel-Gemisch Ni, Fe erhalten, welches der Verhüttung, insbesondere der Ferro-Nickel-Metallurgie, zugeführt werden kann (Gewichtsanteil rund 37 %).

Bei besonderen Anforderungen (höhere Reinheit des Ni-Fe-Gemisches) kann eine Waschbehandlung 9 des magnetischen Anteils HM notwendig sein, wie mit unterbrochenen Linien angedeutet ist. Als Waschflüssigkeit im Bad 9 eignet sich insbesondere verdünnte bis stark verdünnte Essigsäure, welche detergierend und auf Metalle leicht lösend wirkt und gute Benetzung aufweist. Es kann jedoch auch eine Lauge oder lediglich Wasser in Frage kommen. Der Waschvorgang wird zweckmässigerweise durch Ultraschall-Beaufschlagung unterstützt. Die Waschflüssigkeit zirkuliert über einen Filter 10 und/oder wird periodisch destilliert, wobei als Rückstand wiederum Feinanteile S anfallen.

Durch die vorangehende Scheuerbehandlung 8 wird das Material bereits weitgehend mechanisch von den Feinanteilen S (einschliesslich anhaftendem Eletrolyt) befreit, wodurch ggf. die Belastung der Waschflüssigkeit herabgesetzt und deren Aufbereitung erheblich erleichtert wird. Bei besonderen Gegebenheiten kann anderseits die Waschbehandlung das mechanische Scheuern auch vollständig ersetzen.

Anhand der Fig. 2 wird nun die Weiterverarbeitung der Sieb-Feinfraktion F sowie der bei den Verfahrensschritten nach Fig. 1 anfallenden Feinanteile S beschrieben. In der Feinfraktion F mit einem Gewichtsanteil von beispielsweise rund 55 % sind die wesentlichen Anteile des Nickel- und Cadmium-Pulvers (beide metallisch und als Hydroxid) enthalten, ferner ein Teil des Elektrolyten KOH und ein eher geringer Teil der nichtmetallischen Bestandteile PPW.

Die Sieb-Feinfraktion F wird zusammen mit den in vergleichweise geringen Mengen anfallenden Feinanteilen S in einem Säurebad 20 in verdünnter Salzsäure HCl (4M) aufgelöst. In einem nachgeschalteten Filter 21 passiert die Säure mit den in Lösung gegangenen Metallen, während unlösbare Bestandteile, insbesondere restliches Papier, Plastik und Watte PPW als Filterrückstand ausgeschieden und entsorgt werden.

In einer nachgeschalteten Extraktions-Stufe 22 werden aus dem gereinigten Lösungsgemisch einerseits Nickel-Lösung und anderseits Cadmium-Lösung extrahiert. Die beiden Lösungen gelangen je in eine Membran-Elektrolysezelle 23 bzw. 24, in denen metallisches, wiederverwertbares Nickel bzw. Cadmium abgeschieden werden. Allenfalls können auf entsprechende Weise auch andere in Lösung gegangene Metalle, z.B. Eisen, aus der Säure extrahiert werden.

Aus den beiden Zellen 23 und 24 wird die verdünnte Säure zweckmässigerweise über eine Reinigungsstufe 25 geleitet, um den mit den Fraktionen F und S eingetragenen Elektrolyt KOH auszuscheiden. Die so gereinigte Säure wird in das Säurebad 20 rezirkuliert. Die beschriebenen Zirkulationsvorgänge und chemischen bzw. elektrochemischen Reaktionen können chargenweise oder auch kontinuierlich ablaufen.

Obschon das vorstehend beschriebene Ausführungsbeispiel sich auf Nickel-Cadmium-Zellen bezieht, so ist leicht einzusehen, dass grundsätzlich das gleiche Verfahren auch auf Nickel-Hydrid-Zellen anwendbar ist. In solchen Zellen sind Metallhydride in Pulverform, allenfalls gesintert, enthalten, und sie werden bei den beschriebenen mechanischen Verfahrensschritten anstelle des Cadmiums abgetrennt und zurückgewonnen. Eine entsprechende Anpassung erfordern natürlich die nasschemischen Stufen 22, 23 und 24; in allen Fällen wird mindestens metallisches Nickel selektiv extrahiert, je nach Anwendungsfall ferner Cadmium, Metall-Hydrid und ggf. weitere Metalle.

## Patentansprüche

1. Verfahren zum Entsorgen von Nickel-Cadmium- oder Nickel-Hydrid-Zellen mittels mechanischer Zerkleinerung, wobei
- das Schrottmaterial nach Vorzerkleinerung in einem Shredder (1) einer schleifenden Nachzerkleinerung in einem Kreuzscherenschnitt-Shredder (2) unterworfen und anschliessend gesiebt (3) wird,
- die Sieb-Grobfraktion (G) mittels Windsichtung (4) in eine Leichtfraktion (L) und eine Schwerfraktion (H) getrennt und die letztere (H) mittels Magnetscheidung (5) in einen magnetischen (HM) und einen nichtmagnetischen Anteil (HN) getrennt wird,
- die Leichtfraktion (L) und der vorgenannte nichtmagnetische Anteil (HN) getrocknet (6) und anschliessend gesiebt (7) werden, um nichtmetallische Bestandteile (P, PPW) von überwiegend metallischen Feinanteilen (S) zu trennen,
- der magnetische Anteil (HM) durch mechanisches Scheuern (8) und/oder durch Waschen (9) von anhaftendem Elektrolyt und überwiegend metallischen Feinanteilen (S) befreit wird, um ein verhüttbares Nickel-Eisen-Gemisch (Ni, Fe) zu erhalten,
- die Sieb-Feinfraktion (F), die vorgenannten sowie mindestens die bei der Windsichtung (4) anfallenden Feinanteile ((S) in ein Säurebad (20) gegeben werden, um deren metallische Anteile aufzulösen,
- und aus dem Säurebad (20), nach Ausfiltrierung (21) ungelöster Bestandteile (PPW), mindestens das metallische Nickel (Ni) selektiv extrahiert (22, 23, 24) wird.

2. Verfahren nach Anspruch 1, dadurch gekennzeichnet, dass der die Windsichtung (4) bewirkende Luftstrom durch einen Zyklon (15) und einen Luftfilter (16) geleitet wird, um dessen Feinanteil-Beladung (S) abzutrennen.

3. Verfahren nach Anspruch 2, dadurch gekennzeichnet, dass beim Zerkleinern (1, 2) und Sieben (3) des Schrottmaterials entstehender Staub pneumatisch abgeführt und ebenfalls dem Zyklon (15) zugeleitet wird.

4. Verfahren nach Anspruch 1, dadurch gekennzeichnet, dass der magnetische Anteil (HM) mittels Rüttelsieb gescheuert wird.

5. Verfahren nach Anspruch 1, dadurch gekennzeichnet, dass der magnetische Anteil (HM) in einer Siebtrommel gescheuert wird.

6. Verfahren nach Anspruch 1, dadurch gekennzeichnet, dass ein Waschvorgang (8) des magnetischen Anteils (HM) mittels Ultraschall unterstützt wird.

7. Verfahren nach Anspruch 1, dadurch gekennzeichnet, dass eine zum Waschen (8) des magnetischen Anteil (HM) verwendete Waschflüssigkeit im Umlauf filtriert (10) und/oder periodisch destilliert wird.

8. Verfahren nach Anspruch 1, dadurch gekennzeichnet, dass für das Säurebad (20) verdünnte Salzsäure HCl verwendet wird.

9. Verfahren nach Anspruch 1, dadurch gekennzeichnet, dass die Säure des Säurebades (20) von Schrott-Elektrolyt KOH gereinigt und rezikliert wird.

10. Verfahren nach Anspruch 1, dadurch gekennzeichnet, dass aus dem Säurebad metallisches Nickel und Cadmium getrennt extrahiert werden.

## Claims

1. A process for disposing of nickel-cadmium or nickel hydride cells by means of mechanical comminution, wherein
- after preliminary comminution in a shredder (1), the scrap material is subjected to a subsequent abrading comminution in a cross-shear cut shredder (2) and is subsequently screened (3),
- the coarse screened fraction (G) is separated by means of air classification (4) into a light fraction (L) and a heavy fraction (H) and the latter (H) is separated into a magnetic (HM) and a non-magnetic (HN) fraction by means of magnetic separation (5),
- the light fraction (L) and the aforementioned non-magnetic fraction (HN) are dried (6) and subsequently screened (7) in order to separate non-metallic constituents (P, PPW) from predominantly metallic fine fractions (S),
- the magnetic fraction (HM) is freed from adhering electrolyte and from predominantly metallic fine fractions (S) by mechanical scouring (8) and/or by washing (9) in order to obtain a treatable nickel-iron mixture (Ni, Fe),
- the fine screened fraction (F), the aforementioned fine fractions and at least the fine fractions (S) arising on air classification (4) are introduced into an acid bath (20) in order to dissolve their metallic fractions,
- and at least the metallic nickel (Ni) is selectively extracted (22, 23, 24) from the acid bath (20) after filtering out (21) undissolved constituents (PPW).

2. A process according to claim 1, characterised in that the flow of air effecting air classification (4) is passed through a cyclone (15) and an air filter (16) in order to separate its loading of fine fraction (S).

3. A process according to claim 2, characterised in that the dust arising during the comminution (1, 2) and screening (3) of the scrap material is pneumatically carried away and is likewise fed to the cyclone (15).

4. A process according to claim 1, characterised in that the magnetic fraction (HM) is scoured by means of a vibrating screen.

5. A process according to claim 1, characterised in that the magnetic fraction (HM) is scoured in a screening drum.

6. A process according to claim 1, characterised in that the washing operation (8) of the magnetic fraction (HM) is assisted by means of ultrasound.

7. A process according to claim 1, characterised in that a washing liquid used for washing (8) the magnetic fraction (HM) is filtered (10) in circulation and/or periodically distilled.

8. A process according to claim 1, characterised in that dilute hydrochloric acid HCl is used for the acid bath (20).

9. A process according to claim 1, characterised in that the acid of the acid bath (20) is purified from scrap electrolyte KOH and recycled.

10. A process according to claim 1, characterised in that metallic nickel and cadmium are extracted separately from the acid bath.

## Revendications

1. Procédé pour l'élimination de piles à base d'hydrures de nickel ou de nickel-cadmium au moyen d'un broyage mécanique, dans lequel
- après un broyage préliminaire dans un broyeur (1), le matériau de déchet est soumis à un broyage ultérieur par meulage dans un broyeur de coupage à couteaux croisés et, ensuite, est criblé (3),
- la fraction criblée grossière (G) est séparée en une fraction légère (L) et une fraction lourde (H) au moyen d'une séparation à air (4) et la fraction lourde (H) est séparée en une partie magnétique (HM) et une partie non magnétique (HN) au moyen d'un séparateur à aimant (5),
- la fraction légère (L) et la partie non magnétique (HN) précitée sont séchées (6) et sont ensuite criblées (7) pour séparer les constituants non métalliques (P, PPW) de parties fines (S) en majorité métalliques,
- la partie magnétique (HM) est libérée d'électrolyte adhérent et de parties fines (S) en majorité métallique au moyen d'une abrasion mécanique (8) et/ou par lavage (9) afin d'obtenir un mélange de fer et de nickel (Ni, Fe) pouvant être soumis à un traitement métallurgique,
- la fraction criblée fine (F), les parties fines précitées ainsi qu'au moins celles obtenues lors de la séparation à air (4) sont ajoutées dans un bain acide (20) afin de dissoudre leurs parties métalliques,
- et, à partir du bain acide (20), après filtration (21) des constituants non dissout (PPW), au moins le nickel métallique (Ni) est extrait de manière sélective (22, 23, 24).

2. Procédé selon la revendication 1, caractérisé en ce que le courant d'air provoquant la séparation à air (4) est conduit à travers un cyclone (15) et un filtre à air (16) afin de le séparer de sa charge de constituants fins (S).

3. Procédé selon la revendication 2, caractérisé en ce que la poussière résultant du broyage (1, 2) et du criblage (3) du matériau de déchet est évacuée de manière pneumatique et est également conduite au cyclone (15).

4. Procédé selon la revendication 1, caractérisé en ce que la partie magnétique (HM) est abrasée au moyen d'un crible à secousses.

5. Procéde selon la revendication 1, caractérisé en ce que la partie magnétique (HM) est abrasée au moyen d'un tambour cribleur.

6. Procédé selon la revendication 1, caractérisé en ce qu'une opération de lavage (8) de le partie magnétique (HM) est assisté par ultrasons.

7. Procédé selon la revendication 1, caractérisé en ce qu'un liquide de lavage utilisé pour le lavage (8) de la partie magnétique (HM) est filtré (10) lors de la circulation et/ou est distillé périodiquement.

8. Procédé selon la revendication 1, caractérisé en ce qu'on utilise pour le bain acide (20) de l'acide chlorhydrique HCl dilué.

9. Procédé selon la revendication 1, caractérisé en ce que l'acide du bain acide (20) est purifié d'électrolyte de déchet KOH et est recirculé.

10. Procédé selon la revendication 1, caractérisé en ce que le nickel et le cadmium métalliques sont extraits du bain acide de façon séparée.
